# DEMANDE DE BREVET EUROPEEN

(11) **EP 1 209 438 A1**
(43) Date de publication de la demande: **29.05.2002**
(21) Numéro de dépôt: 01403001.9
(22) Date de dépôt: 22.11.2001
(51) Int. Cl.: G01B 3/10

(54) **Procédé et Instrument combiné pour réaliser des mesures, des tracés, ainsi que certains travaux de découpe**

(30) Priorité: 22.11.2000 FR 0015159
(71) Demandeur: Jager, Ivan, 39230 Saint Lamain (FR)
(72) Inventeur: Jager, Ivan, 39230 Saint Lamain (FR)
(74) Mandataire: Pontet, Bernard

(57) **Abrégé**

L'invention concerne un instrument combiné permettant les prises de mesures dimensionnelles, certains types de tracés parallèles, perpendiculaires ou à un angle déterminé du bord d'un matériau ainsi que la réalisation de certaines découpes de matériaux d'oeuvre.

Il est constitué, d'un corps (2) comprenant un porte outil (5), d'un ruban (1), et d'un guide (10) monté mobile par rapport au ruban (1). Un outil comme par exemple un crayon (7) est réglé et fixé au porte outil (5) de telle manière que l'extrémité de la mine (8) dépasse de la face inférieure du corps formant semelle d'appui (9). Le guide (10) est fixé à l'extrémité du ruban (1) de telle sorte que la surface active (11) du guide (10) puisse s'appliquer contre le bord d'un matériau d'oeuvre. D'autres outils peuvent être fixés au porte outil et permettent d'utiliser l'instrument combiné pour réaliser des travaux comme par exemple la coupe ou le pré découpage de certains matériaux d'oeuvre.

## Description

La présente invention concerne un instrument polyvalent de mesure, de traçage ou de découpe ainsi que des procédés de mesure, de traçage ou de découpe de matériaux au moyen de cet instrument. L'invention concerne en outre un accessoire approprié pour entrer dans la constitution de l'instrument polyvalent.

On connaît les outils comme le mètre à ruban, la règle, le crayon, le compas, l'équerre qui sont utilisés par les bricoleurs ou les professionnels.

Ces nombreux outils, différents et complémentaires obligent l'utilisateur à tous les avoir à portée de la main et ce même pour des travaux relativement simples.

Certains de ces outils sont encombrants et peu pratiques à transporter, ce qui est le cas par exemple d'une règle en aluminium dont la longueur de 2 ou 3 m est fréquente.

Enfin, les différents cas d'utilisation de ces outils 'obligent parfois l'utilisateur à des manipulations compliquées et/ou acrobatiques. Par exemple, le simple traçage de deux traits à une distance déterminée sur un mur à l'aide d'un mètre à ruban est souvent délicat :
- la main gauche en tirant sur l'extrémité du ruban, déroule celui-ci et le maintient de telle sorte que la butée située à l'extrémité du ruban soit positionnée sur un premier trait préalablement tracé sur le mur. Cette même main gauche doit aussi maintenir le crayon qui sera utilisé pour le deuxième tracé ;
- la main droite maintient le boîtier au-delà de la mesure à restituer, afin de laisser libre le champ de vision sur le mur au-dessus et/ou au-dessous du ruban, l'utilisateur pouvant ainsi lire la mesure à restituer sur le ruban ;
- lorsque l'utilisateur veut marquer le deuxième trait, il 35doit d'abord, à l'aide de sa main droite, essayer de maintenir contre le mur la portion du ruban comprenant l'indication de la mesure ;
- puis à l'aide de sa main gauche, il doit lâcher l'extrémité du mètre, pour pouvoir tracer un trait précis en correspondance avec la mesure choisie lue sur le ruban.

Ce type de manipulation désagréable et peu précise est très fréquent chez les bricoleurs.

Dans un autre exemple relatif au traçage d'un trait de découpe en forme de rectangle sur une planche de contreplaqué, l'utilisateur a besoin de quatre outils : un mètre, une règle, une équerre, un crayon. Lorsque cette planche est disposée à plat, l'utilisateur peut réaliser seul ce type de tracé à l'aide de ces quatre outils. Si cette planche est disposée verticalement, le tracé devient très difficile ou même impossible à réaliser par une seule personne, en particulier pour les traits de grande longueur.

Les brevets US-A-5 295 308, 2 976 614 et 4 914 830, et le JP-A-63 212 801 enseignent d'associer au boîtier d'enroulement d'un mètre à ruban un outil, par exemple un crayon. Ceci permet de former sur une pièce d'oeuvre un trait perpendiculairement à la direction longitudinale du ruban, à une distance déterminée d'un bord de la pièce d'oeuvre, en faisant coulisser un guide d'extrémité du ruban contre ledit bord de la pièce d'oeuvre.

Le US-A-5 295 308 propose en outre de monter sur le ruban une poignée coulissante (10) permettant une meilleure tenue du dispositif pendant qu'on le fait glisser sur la surface de la pièce d'oeuvre pour former le trait.

Le brevet US-A-6 115 931 enseigne de fixer un outil orientable à l'extrémité du ruban et un crayon sur le boîtier d'enroulement.

Tous ces dispositifs antérieurs ne permettent que des opérations relativement limitées, ou alors nécessitent une panoplie d'accessoires interchangeables.

Le but de la présente invention est de remédier à ce genre d'inconvénients en proposant à un utilisateur non averti, un unique outil polyvalent, compact, d'utilisation simple permettant de réaliser en plus des prises de mesures, certaines des opérations suivantes: les tracés sur un matériau d'oeuvre de droites parallèles, perpendiculaires ou à n'importe quel angle choisi par rapport à un bord rectiligne du matériau; les tracés de cercles sur des matériaux; la réalisation de certaines opérations notamment de découpe de certains matériaux. Dans la suite, on appellera cet outil polyvalent: "instrument combiné".

Suivant l'invention, l'instrument combiné comprenant:
- un ruban gradué portant un guide comportant au moins une surface active applicable contre un bord d'un matériau d'oeuvre,
- un corps comprenant un boîtier dans lequel s'enroule le ruban et comportant une face inférieure formant semelle d'appui,
- un système de verrouillage du ruban,
- sur le corps, un porte-outil agencé de manière telle qu'on peut y régler et fixer un outil de telle sorte qu'une extrémité active de l'outil dépasse de la semelle du corps,
est caractérisé en ce que le guide est monté de manière mobile relativement au ruban gradué.

La mobilité du guide peut prendre différentes formes, alternatives ou annulatives. Le guide peut être pivotant, permettant ainsi de conduire l'outil, porté par le boîtier, suivant un cercle centré sur le pivot du guide. Le guide peut être coulissant le long du ruban. On peut ainsi l'escamoter près du corps pour pouvoir utiliser le mètre à ruban pour effectuer une mesure de manière classique.

Le porte-outil peut être équipé d'outils très différents les uns des autres : crayon, stylo, outil possédant une extrémité coupante, pointe à tracer, roulette destinée à couper le verre ou les carreaux de carrelage, pinceau etc.

Dans un premier mode de réalisation de l'instrument combiné, l'outil réglé et fixé au porte-outil est un traceur comme par exemple un crayon. L'instrument combiné permettra ainsi d'exécuter certains tracés. Par exemple, l'exécution de petits traits de repérage équidistants sur un mur. Pour réaliser ces tracés avec l'instrument combiné, on dévide et on bloque le ruban à l'aide du système de verrouillage, on place la butée située à l'extrémité du ruban sur un premier trait réalisé préalablement, on applique la semelle du corps contre le mur. En manipulant le corps de l'instrument combiné par un petit geste perpendiculaire à l'axe longitudinal du ruban, on trace un deuxième trait à une distance précise du premier trait. De même, si on accroche la butée du ruban contre le bord d'un matériau, le ruban étant verrouillé au corps, on peut, en manipulant le corps de l'instrument combiné, réaliser un trait sur le matériau et à une distance déterminée du bord de ce matériau. Ces utilisations pour réaliser de petits tracés de repérage répétitifs seront appréciées dans la pratique, par exemple pour déterminer et tracer sur la périphérie des murs d'une pièce d'habitation, le nombre et l'emplacement des lais de papier peint nécessaires au revêtement de ces murs.

Dans la suite, et pour simplifier, on utilisera généralement l'exemple du crayon dans les différents modes de réalisation ou d'utilisation de l'instrument combiné.

Dans une variante de l'invention, le corps de l'instrument combiné possédera au moins une cavité destinée à stocker un ou des outils tels que traceur, roulette de vitrier, pointe à tracer, outil possédant une lame coupante, etc.

Dans un deuxième mode de réalisation, l'instrument combiné est caractérisé en ce que le ruban porte un guide comportant au moins une surface active disposée de telle sorte qu'elle puisse s'appliquer contre le bord d'un matériau d'oeuvre. Ce deuxième mode de réalisation de l'invention permet de réaliser notamment des tracés parallèles au bord rectiligne d'un matériau. Pour réaliser un tel tracé, dans un premier temps on dévide et on bloque le ruban. A l'aide d'une main, on place le corps de telle sorte que sa semelle d'appui soit appliquée sur le matériau à tracer, à l'aide de l'autre main, on positionne le guide de telle sorte que sa surface active soit contre le bord rectiligne du matériau à tracer. En faisant glisser l'ensemble de l'instrument combiné avec un geste simultané des deux mains et parallèle au bord du matériau, on réalise un trait parfaitement rectiligne et parallèle au bord du matériau. On voit par cet exemple l'utilité du guide dont la surface active glisse contre le bord du matériau et maintient constant l'angle entre l'axe longitudinal du ruban et le bord rectiligne du matériau pendant le tracé. La surface active du guide doit posséder des dimensions adaptées pour l'usage. On évite ainsi que le mouvement de l'une des deux mains soit plus rapide que l'autre pendant le tracé.

Par ailleurs, l'instrument combiné possède une caractéristique telle que la distance entre la surface active du guide et l'extrémité active de l'outil soit égale à la mesure lue sur le ruban à l'aide généralement de la partie supérieure de l'ouverture permettant le passage du ruban hors du corps. Cette partie du corps sera appelée dans la suite "viseur". Si on déroule puis on bloque le ruban à une mesure choisie lue sur le ruban à l'aide du viseur et en utilisant alors l'instrument combiné comme on vient de le décrire, on exécute un trait parallèle, à une distance du bord du matériau correspondant à la mesure lue sur le viseur du corps.

Une variante de l'invention permet de régler le porte-outil en translation parallèle à l'axe longitudinal du ruban par rapport à une surface adjacente du corps. Ce réglage sera particulièrement apprécié notamment lors du traçage de matériaux destinés à être positionnés avec un certain jeu dans des emplacements donnés. Par exemple lors de la pose du dernier rang de carreaux de carrelage sur le sol d'une pièce, la mesure des coupes à réaliser doit être inférieure d'une valeur constante pouvant être de plus de 1 centimètre par rapport à la mesure prise entre l'avant-dernier rang de carreaux et le mur. Cette valeur constante que l'on doit enlever de chaque prise de mesure pour réaliser le tracé, est, dans ce cas, la largeur du joint séparant les carreaux de carrelage à laquelle on ajoute le jeu nécessaire à une pose aisée du carreau coupé. En décalant le porte-outil de cette valeur constante en direction de l'extrémité du ruban, la distance entre l'extrémité active de l'outil et la surface active du guide sera diminuée de cette valeur constante, par rapport à la mesure lue sur le ruban à l'aide du viseur. Il ne sera alors pas nécessaire à l'utilisateur de l'instrument combiné de faire pour chaque tracé ce calcul pour régler son instrument. Pour chaque mesure prise, l'utilisateur réglera l'instrument combiné à la mesure prise, pour réaliser un tracé décalé sur le carreau à poser.

Selon une autre variante de l'invention le guide comprend au moins deux roulettes d'un diamètre approprié pour que le guide puisse parcourir fidèlement une forme courbe. Les roulettes remplacent la surface active du guide. En positionnant le guide contre le bord courbe d'un matériau d'oeuvre, on peut ainsi réaliser sur ce matériau un tracé courbe.

Le deuxième mode de réalisation permet aussi la mise en oeuvre d'un procédé pour tracer un trait tel qu'un trait dessiné ou un trait de coupe sur un matériau d'oeuvre à l'aide de l'instrument combiné. Ce procédé est caractérisé en ce qu'on positionne contre un bord du matériau d'oeuvre la surface active du guide, on positionne sur le matériau d'oeuvre la semelle du corps, le corps comprenant le porte-outil équipé par exemple d'un crayon dont l'extrémité de la mine dépasse de la semelle. On réalise le traçage par déroulage ou enroulage du ruban du ou dans le corps, en faisant ainsi glisser l'extrémité de la mine contre la surface du matériau. En réalisant ce procédé sur un matériau possédant un bord rectiligne, si la surface active du guide est perpendiculaire à l'axe longitudinal du ruban, le trait réalisé sera perpendiculaire au bord rectiligne du matériau.

Dans un troisième mode de réalisation, le guide est fixé au ruban à l'aide d'un pivot permettant au guide une rotation dans un plan sensiblement parallèle au ruban. Ce mode de réalisation est destiné plus particulièrement à la mise en oeuvre et suivant des angles déterminés, variés, du procédé pour tracer des traits dessinés ou de coupe que l'on vient de décrire. Ce type de manipulation sera amélioré par un système de blocage permettant de maintenir le guide à un angle déterminé par rapport à l'axe longitudinal du ruban.

On pourra améliorer l'usage de l'instrument combiné par des moyens antidérapants prévus notamment sur la surface active du guide destinée à être positionnée contre le bord d'un matériau d'oeuvre. Par exemple, lors du tracé d'un trait par enroulage ou déroulage du ruban à un angle déterminé, le guide doit être maintenu positionné au même endroit précis du bord du matériau d'oeuvre à tracer. Pour aider ce maintien et en complément d'une pression suffisante exercée par l'utilisateur contre le guide, des moyens antidérapants comme par exemple de petites aspérités garnissent la surface active du guide positionnée contre le bord du matériau. Ces moyens, par ailleurs, autorisent le glissement de la surface active du guide positionnée contre le bord du matériau dès lors que l'utilisateur n'exerce qu'une faible pression contre le guide.

Par ailleurs, l'instrument combiné permet de réaliser des tracés de cercles. Selon l'invention le guide comprend un perçage permettant le passage d'une pointe destinée à être enfoncée légèrement dans un matériau d'oeuvre tendre tel qu'une planche de bois. Avant l'utilisation de l'instrument, le guide est réglé à un angle tel que la distance entre le perçage du guide et l'extrémité active de l'outil soit égale à la mesure lue sur le ruban à l'aide du viseur. L'utilisateur bloque le ruban à une mesure déterminée. A l'aide d'une main, il place le corps de telle sorte que sa semelle d'appui soit appliquée sur le matériau à tracer, à l'aide de l'autre main, il positionne le guide de telle sorte que sa face inférieure soit positionnée sur la surface du matériau. L'utilisateur place une pointe à travers le trou existant dans le guide et l'enfonce à l'endroit désiré dans le matériau; Il lui suffit alors de manipuler le corps dont la semelle est appliqué sur le matériau pour réaliser un tracé circulaire.

Dans le cas de surfaces particulièrement dures, la partie inférieure du guide sera pourvue de moyens antidérapants comme par exemple un patin de caoutchouc. Lorsque le guide est bloqué en angle et appliqué fermement à plat sur la surface, on peut réaliser des tracés dessinés ou des tracés de coupe rectilignes par déroulage ou enroulage du ruban. Lorsque le guide n'est pas bloqué en angle par rapport au ruban, donc libre en rotation, en appliquant fermement la partie inférieure du guide munie d'un patin de caoutchouc sur la surface et après avoir bloqué le ruban au corps, on pourra réaliser notamment des tracés de cercles par manipulation du corps dont la semelle d'appui sera appliquée sur la surface.

Une autre caractéristique de l'invention permet le copiage du profil d'une paroi sur un matériau d'oeuvre. Selon l'invention, le guide possède un bossage lui permettant d'être positionné en appui contre une paroi. L'angle de réglage du guide sera tel que le plan passant par le bossage et l'axe du traceur soit parallèle à l'axe longitudinal du ruban. Ce réglage n'est pas indispensable, mais il favorise le geste de traçage. L'utilisateur, en maintenant en appui le bossage contre la paroi et en déplaçant l'instrument combiné, la semelle d'appui étant positionnée contre un matériau à tracer, réalise sur le matériau un trait correspondant au dessin du profil de la paroi. Si on découpe le matériau suivant ce tracé, il pourra ainsi s'ajuster parfaitement à la paroi.

Pour permettre une utilisation encore plus complète, pour faciliter les prises de mesures ou réaliser des traits de grandes longueurs par exemple, l'instrument combiné pourra être perfectionné.

Ainsi, dans un quatrième mode de réalisation, l'invention est caractérisée en ce que le guide est fixé à un traînard pouvant coulisser librement et précisément le long du ruban; le traînard ainsi équipé sera appelé "traînard porte-guide". Le traînard porte-guide est doté d'un système de verrouillage permettant son blocage précis à n'importe quel emplacement tout le long du ruban; le système de verrouillage peut être identique à celui utilisé sur le corps. Le traînard porte-guide et le corps possèdent des moyens d'ajustement lorsqu'ils sont positionnés l'un contre l'autre. Ces moyens permettent au traînard porte-guide et au corps d'être facilement solidarisés ou désolidarisés l'un de l'autre.

Lorsque le traînard porte-guide et le corps sont solidarisés, l'instrument combiné s'utilise avec la même facilité qu'un mètre à ruban classique, l'extrémité du ruban n'étant alors pas munie de guide; le système de verrouillage équipant le traînard porte-guide permettant de bloquer le ruban comme on peut le faire avec les mètres à ruban classiques.

Lorsque le traînard porte-guide est positionné et bloqué à l'extrémité du ruban, l'instrument combiné possède exactement les mêmes capacités d'utilisation que les différents modes de réalisation précédemment décrits.

Une autre variante de l'instrument combiné est caractérisée en ce que le porte-outil est directement fixé au boîtier dans lequel s'enroule le ruban. Le boîtier possède dans ce cas les mêmes caractéristiques que le corps précédemment décrit.

Dans un cinquième mode de réalisation, l'instrument combiné est caractérisé en ce que le corps comprend en plus du boîtier, un traînard-support, mobile par rapport au boîtier et auquel est fixé le porte-outil, et pouvant coulisser librement et précisément le long du ruban. Le traînard-support est muni d'un système de verrouillage lui permettant d'être solidarisé ou non avec le ruban. Le traînard-support est équipé de moyens permettant son association ajusté avec le boîtier et avec le traînard porte-guide.

Ce cinquième mode de réalisation permet, en plus des capacités d'utilisation précédemment décrites, d'effectuer certains tracés dessinés ou de coupes particuliers. Par exemple, si on accroche la surface active du guide équipant le traînard porte-guide contre le bord d'un matériau à tracer et qu'on déroule le ruban d'une longueur suffisante, on peut, après avoir verrouillé le ruban au boîtier, maintenir tendu le ruban parallèlement à la surface du matériau en tirant sur le boîtier d'une seule main. En faisant coulisser le traînard-support équipé d'un crayon tout le long du ruban avec l'autre main, on réalise un trait parfaitement rectiligne sur le matériau. La précision d'ajustage du traînard support sur le ruban permet à ce dernier de ne pas se déformer et de rester parfaitement rectiligne pendant que le traînard-support est manipulé le long du ruban. Ce mode de réalisation sera particulièrement utile lors d'un tracé perpendiculaire ou à un angle déterminé par rapport au bord d'un matériau d'oeuvre.

Une variante de ce mode de réalisation permet notamment les tracés de grandes longueurs. Le boîtier est alors équipé au moins indirectement d'un appui mobile, de façon que le ruban étant accroché à un bord d'un matériau d'oeuvre, le ruban est déroulé de telle sorte que l'appui mobile soit positionné contre un bord opposé de ce matériau pour tendre le ruban lorsque le ruban est verrouillé au corps du boîtier. Dans ce cas, l'appui mobile remplace en quelque sorte une main de l'utilisateur qui tend le ruban. Il permet de tendre le ruban sur de grandes longueurs et de solidariser l'ensemble de l'instrument combiné avec le matériau d'oeuvre à tracer. En faisant coulisser le traînard-support équipé par exemple d'un crayon tout le long du ruban, on réalise un trait parfaitement rectiligne sur le matériau. L'appui mobile pourra être actionné notamment à l'aide d'une vis de réglage.

Dans certains cas, l'appui mobile peut également être utilisé comme guide qui, placé contre le bord d'un matériau, permet différents types de tracés à l'aide du traînard-support équipé par exemple d'un crayon.

Une autre variante de l'invention est caractérisée par l'adjonction sur le ruban d'autres traînards pouvant être munis de différents outils tels que par exemple, crayon, niveau à bulle, lame coupante, roulette de vitrier, serre-joints etc.. et pouvant coulisser librement et précisément le long du ruban. Ces différents traînards peuvent être positionnés sur le ruban les uns derrière les autres. Ces traînards pourront soit s'ajuster les uns aux autres par exemple par encliquetage, soit être utilisés indépendamment ou en combinaison, les traînards étant munis d'un système de verrouillage leur permettant d'être solidarisés ou non avec le ruban.

Suivant un autre aspect de l'invention, un accessoire approprié pour former le trainard-support d'un instrument, comprend :
- des moyens de coulissement le long du ruban gradué d'un mètre à ruban,
- un porte-outil agencé de manière telle qu'on peut y régler et fixer un outil de telle sorte qu'une extrémité active de l'outil puisse coopérer avec un matériau d'oeuvre contre lequel est placé le ruban.

De préférence, les moyens de coulissement comprennent, en regard de l'une des faces du ruban, deux rebords entre lesquels est ménagé une ouverture permettant de monter l'accessoire sur le ruban :
- en pressant localement l'un vers l'autre les bords latéraux du ruban, puis en laissant le ruban se détendre élastiquement derrière les rebords ; et/ou
- en glissant l'accessoire par l'extrémité libre du ruban de part et d'autre d'une languette de butée fixée à ladite extrémité du ruban.

La présente invention va être décrite d'une façon non limitative en référence aux dessins annexés, sur lesquels :
La figure 1 illustre un mode de réalisation de l'instrument combiné vu en perspective.
Les figures 2 à 4 illustrent par des vues de coté et de dessus certaines caractéristiques dimensionnelles de l'instrument combiné.
La figure 5 illustre par une vue de coté une variante de l'instrument combiné lorsque la position du porte-outil est réglable en translation sur le corps.
La figure 6 illustre par une vue en perspective une caractéristique du guide destiné aux tracés par copiage de profil.
La figure 7 illustre par une vue du dessus le réglage en angle du guide dans le cas de tracés par copiage de profil.
La figure 8 illustre par une vue en perspective une variante du guide équipée de roulettes et permettant de suivre le bord courbe d'un matériau d'oeuvre.
La figure 9 illustre par une vue de dessus différents tracés effectués à l'aide de l'instrument combiné.
La figure 10 illustre par une vue en perspective un mode de réalisation de l'instrument combiné où le guide est fixé à un traînard porte-guide, pouvant coulisser sur le ruban.
La figure 11 illustre par une vue en perspective le même mode de réalisation lorsque le traînard porte-guide est positionné contre le corps permettant ainsi d'utiliser le ruban comme celui d'un mètre à ruban classique.
La figure 12 illustre par une vue en perspective un mode de réalisation de l'instrument combiné où le porte-outil est fixé sur un traînard-support pouvant coulisser sur le ruban.
La figure 13 illustre par une vue en perspective le même mode de réalisation lorsque le traînard porte-guide, le traînard-support et le boîtier sont positionnés l'un contre l'autre, permettant ainsi d'utiliser le ruban comme celui d'un mètre à ruban classique.
La figure 14 illustre par une vue de coté une variante de l'instrument combiné où le boîtier est équipé d'un appui mobile réglable permettant à l'ensemble de l'instrument combiné d'être solidarisé avec un matériau, permettant de réaliser notamment des traits de grandes longueurs.
La figure 15 est une vue en perspective d'un accessoire selon l'invention, à l'état monté sur le ruban, avec schéma partiel d'installation dans la partie droite de la figure.
La figure 16 est une vue de face de l'accessoire, illustrant un autre mode de montage.

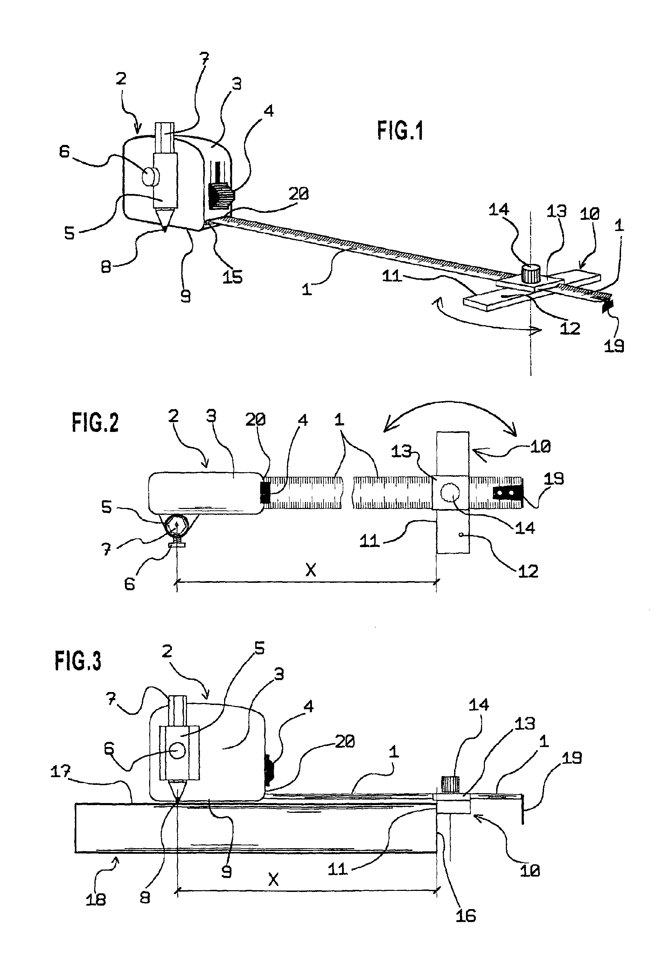

D'une manière connue, le mètre à ruban visible sur la figure 1, comprend :
- un ruban gradué 1 possédant à son extrémité, une butée 19.
- un corps 2

Le corps 2 comprend notamment :
- un boîtier 3 comprenant généralement un système permettant le rembobinage du ruban 1 dans le boîtier 3.
- un dispositif de blocage du ruban 1 , commandé par un levier 4 à deux positions.
- une semelle d'appui 9 constituée par la face inférieure du corps 2.

Selon l'invention, un porte-outil 5 en forme de tube est fixé sur une joue latérale du corps 2 adjacente à la semelle d'appui 9. Le porte-outil 5 comporte un moyen de serrage 6 constitué d'une vis manipulable à la main qui permet de régler et de bloquer un outil comme par exemple un crayon 7 de telle sorte que la surface active de l'outil constituée par la mine 8 du crayon 7, dépasse de la semelle d'appui 9. Ce réglage est visible sur la figure 3 où la semelle d'appui 9 du corps 2 de l'instrument combiné est disposée contre la surface 17 d'un matériau 18.

Toujours selon l'invention, un guide 10 est fixé au ruban 1 de telle sorte que la surface active 11 du guide 10 puisse être appliquée contre le bord 16 d'un matériau 18 lors de l'utilisation de l'instrument combiné. Un système de blocage en angle du guide par rapport au ruban est réalisé notamment par une vis non représentée mais dont la tête 14 est manipulable à la main. Cette vis traverse le ruban 1, et vient se visser dans le guide 10. Lorsque la vis n'est pas serrée, le guide 10 est libre en rotation par rapport au ruban 1; le corps de la vis faisant office de pivot. Une pièce 13 surmoulée sur le ruban permet de renforcer ce dernier au niveau du passage de la vis. En serrant la vis à l'aide de sa tête 14, on bloque le guide 10 à un angle déterminé du ruban 1.

Lorsqu'il sera utilisé, l'instrument combiné pourra être réglé et positionné notamment comme le montre la figure 3 ou l'on peut observer que :
- La surface active 11 du guide 10 est positionnée contre le bord 16 d'un matériau 18.
- Le guide 10 est solidarisé avec le ruban 1 par serrage de la vis à l'aide de sa tête 14.
- Le ruban 1 est verrouillé relativement au corps 2 à l'aide du levier 4.
- L'extrémité de la mine 8 du crayon 7 placé dans le porte-outil 5 dépasse de la semelle d'appui 9 et est ainsi en contact avec la surface 17 du matériau 18.

Lorsque le ruban 1 est bloqué à l'aide du levier 4, un viseur 20 permet de lire sur le ruban 1 la mesure entre la butée 19 du ruban 1 et le viseur 20. Le viseur 20 est matérialisé par la partie supérieure de l'ouverture 15 d'où le ruban sort du corps 2,.

Pour une utilisation pratique, l'outil devra posséder des caractéristiques dimensionnelles représentées aux figures 2 et 3. En particulier, lorsque le ruban 1 est bloqué à une valeur X lue sur le ruban à l'aide du viseur 20, la distance entre l'extrémité 8 du crayon 7 et la surface active 11 du guide 10 doit être de cette valeur X.

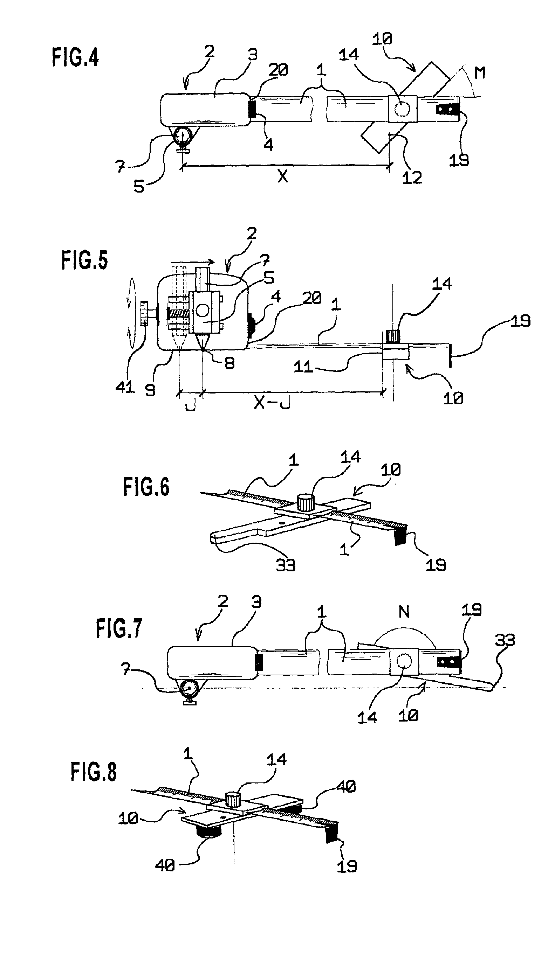

Pour compléter l'utilisation de l'instrument combiné, un trou 12 (figure 4) est réalisé dans le guide 10 à un endroit tel que lorsque le ruban 1 est bloqué à une valeur X lue sur le ruban à l'aide du viseur 20 et lorsque le guide est positionné à un angle M, la distance entre l'extrémité active du crayon 7 et le trou 12 doit être de cette valeur X. Ce trou permet le passage d'une pointe destinée à être enfoncée dans un matériau, comme une planche de bois, sur lequel on désire réaliser notamment des tracés de cercles.

Dans cette première configuration, l'instrument combiné permet de réaliser différents travaux.

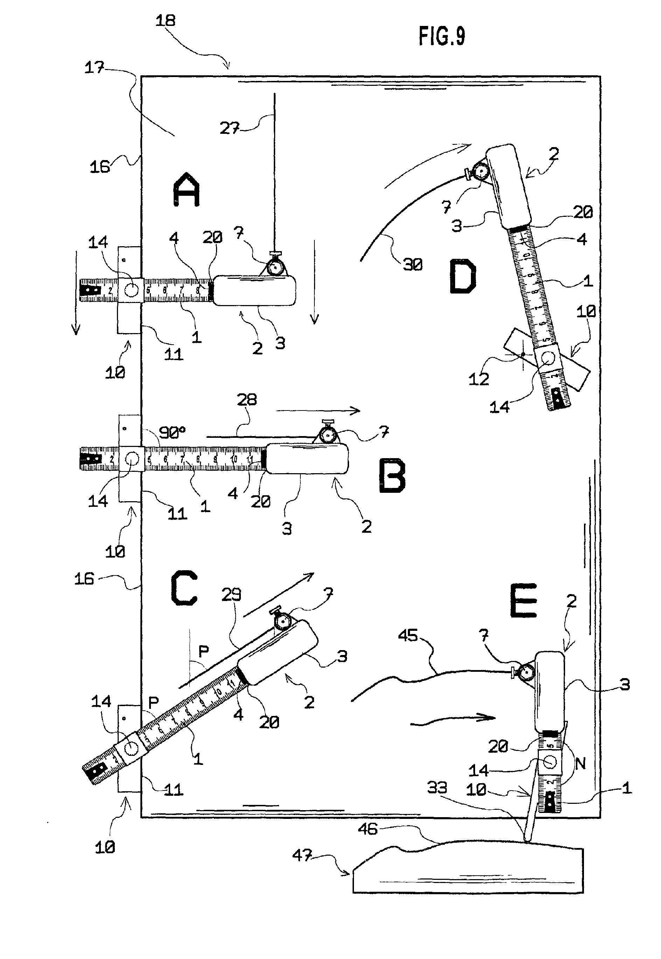

Comme le montre le dessin A de la figure 9, on pourra notamment réaliser sur la surface 17 d'un matériau d'oeuvre 18, un trait rectiligne 27, parallèle au bord rectiligne 16 du matériau 18. Dans ce cas, le guide 10 est réglé et bloqué sur le ruban 1 de telle sorte que la surface active 11 soit à un angle de 90° par rapport à l'axe longitudinal du ruban 1. Le ruban 1 est bloqué relativement au corps 2 à l'aide du levier 4 à une mesure déterminée lue sur le ruban 1 à l'aide du viseur 20. Le crayon 7 est disposé dans le porte-outil 5 de telle sorte que l'extrémité 8 de sa mine dépasse la semelle d'appui 9. L'utilisateur, tenant d'une main le corps 2 dont la semelle d'appui 9 est positionnée contre la surface 17 du matériau 18, et de l'autre main le guide 10 dont la surface active 11 est plaquée contre le bord 16 du matériau 18, va faire glisser l'ensemble de l'instrument combiné parallèlement au bord 16 du matériau 18. L'extrémité 8 de la mine du crayon 7 va ainsi tracer sur la surface 17 du matériau 18 un trait 27 parfaitement parallèle au bord 16 du matériau.

Comme le montre le dessin B de la figure 9, on pourra notamment tracer sur la surface 17 une droite 28 perpendiculaire au bord 16 du matériau 18.

Lors de l'utilisation de l'instrument combiné, le ruban 1 n'est pas bloqué relativement au corps 2 et le guide 10 est maintenu immobile par une main de l'utilisateur, la surface active 11 étant placée contre le bord 16 du matériau 18. Tenant de l'autre main le corps 2 dont la semelle d'appui 9 est positionnée contre la surface 17 du matériau 18, l'utilisateur, pour dévider le ruban 1 va faire glisser la semelle d'appui 9 sur la surface du matériau et dans l'axe longitudinal du ruban 1. Si le guide 10 est bloquée relativement au ruban 1 de telle manière que la surface active 11 est à un angle de 90° par rapport à l'axe longitudinal du ruban, l'extrémité 8 du crayon 7 va tracer sur la surface 17 du matériau 18 un trait 28 parfaitement perpendiculaire au bord 16 du matériau.

Comme le montre le dessin C de la figure 9 on pourra notamment tracer des droites à un angle déterminé P par rapport au bord rectiligne d'un matériau.

Si on positionne la surface active 11 du guide 10 à un angle P par rapport au ruban 1 et en renouvelant l'opération précédemment décrite, on obtient un trait rectiligne 29 disposé à un angle P par rapport au bord 16 du matériau 18.

Comme le montre le dessin D de la figure 9 on pourra notamment tracer des cercles.

Dans ce cas, le guide 10 est bloqué relativement au ruban à un angle M déterminé. Cet angle M est tel que la distance entre le trou 12 réalisé dans le guide 10 et l'extrémité 8 du crayon 7 soit égale à la mesure lue sur le viseur 20 du corps 2. En positionnant l'instrument combiné sur le matériau de telle sorte que la parie inférieure du guide 10 ainsi que la semelle d'appui 9 soit appliqués sur la surface 17 du matériau 18, puis en introduisant par exemple une pointe à travers le trou 12 afin qu'elle puisse s'enfoncer dans le matériau 18, l'utilisateur, en manipulant le corps 2 de l'instrument combiné, peut réaliser un tracé circulaire 30.

Comme le montre le dessin E de la figure 9 on pourra notamment réaliser des tracés par copiage de profil.

Dans ce cas, le guide 10 possède un bossage 33. L'utilisation de l'outil sera plus pratique lorsque l'angle formé par le guide 10 et l'axe longitudinal du ruban 1 aura une valeur N telle que le bossage 33 soit dans le même plan, parallèle à l'axe longitudinal du ruban, que l'extrémité 8 de la mine du crayon 7 (figure 7). Pour réaliser le tracé 45 du profil 46 de la paroi du volume 47 sur la surface 17 d'un matériau 18, l'utilisateur déplace l'instrument combiné tout en maintenant le bossage 33 du guide appliqué contre la paroi du volume 47.

Dans une variante de l'instrument combiné représentée à la figure 5, le porte-outil 5 sera réglable en translation à l'aide d'une vis micrométrique 41. Dans le cas représenté, le porte-outil 5 est décalé de son origine d'une valeur J. Lorsque le ruban 1 est bloqué à une valeur X lue sur le ruban 1 à l'aide du viseur 20, la distance entre la surface active 11 du guide 10 et l'extrémité 8 du crayon 7 est de X moins J. Ce type de réglage sera apprécié notamment lors de travaux répétitifs nécessitant par exemple un jeu déterminé constant entre la pièce tracée et la mesure de l'emplacement qui lui est destiné; par exemple lors de tracés de coupes de carrelage ou lors de tracés de lames de parquets flottants.

Dans une autre variante illustrée par la figure 8, la surface active 11 du guide 10 est remplacée par deux roulettes 40 disposées de telle sorte qu'elles puissent s'appliquer contre le bord courbe d'un matériau, permettant à l'instrument combiné notamment les tracés de courbes sur ce matériau.

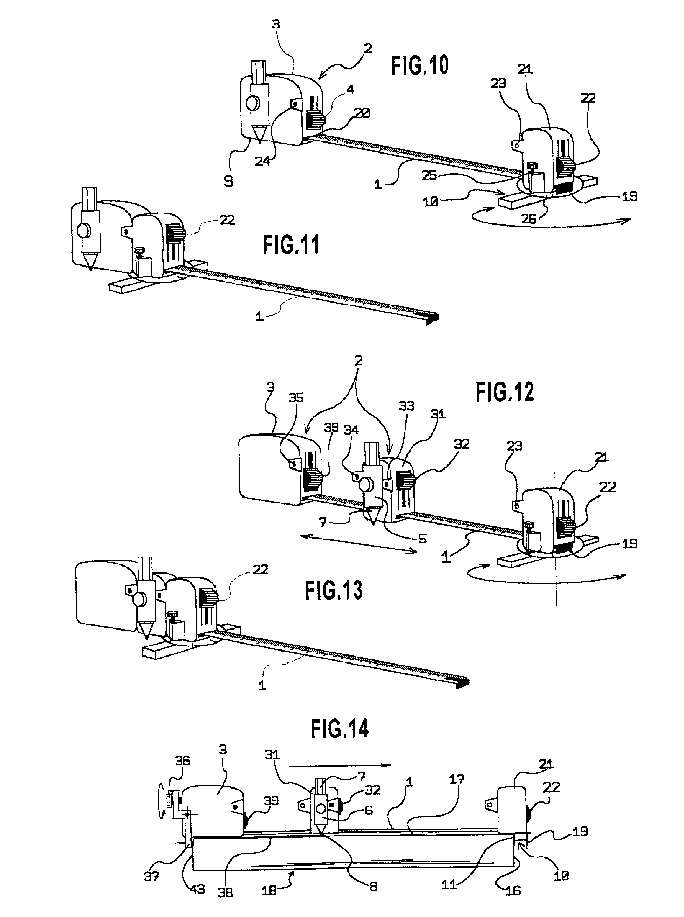

Un autre mode de réalisation de l'invention, illustré aux figures 10 et 11, permet notamment de ne pas modifier l'extrémité des rubans équipant généralement les mètres à ruban classique. Dans ce cas le guide 10 est fixé sous un traînard porte-guide 21 ajusté au ruban 1. Le traînard porte-guide 21 peut coulisser librement et précisément le long du ruban 1. Un système de verrouillage commandé par le levier 22 permet de bloquer le traînard porte-guide 21 à n'importe quelle position sur le ruban 1. Le guide 10 est fixé au traînard porte-guide 21 de telle sorte qu'il puisse être libre en rotation à l'aide par exemple d'un pivot non représenté permettant une rotation et un réglage en angle déterminé par rapport à l'axe longitudinal du ruban. Un système de blocage par exemple par vis 25 agissant sur un disque 26 solidaire du guide 10 permet de bloquer le guide à un angle déterminé. Cet angle peut être visualisé par exemple à l'aide de graduations réalisées sur le disque 26. Des moyens d'ajustement 23 et 24 permettent de solidariser le traînard porte-guide 21 et le corps 2. On voit par la figure 11 que l'instrument combiné peut être utilisé de la même manière qu'un mètre à ruban classique. Le ruban 1 peut être verrouillé ou déverrouillé à l'aide du levier 22 du traînard porte-guide 21. Lorsque l'utilisateur souhaite réaliser un tracé, il laisse le ruban se rembobiner de telle sorte que la butée 19 du ruban se positionne contre le traînard porte-guide 21. A l'aide du levier 22 il solidarise le traînard porte-guide à l'extrémité du ruban. En désolidarisant le traînard porte guide 21 du corps 2, l'instrument combiné s'utilise alors exactement de la même manière que précédemment illustré par les schémas de la figure 9.

Un autre mode de réalisation de l'invention représenté sur les figures 12 et 13 permet de réaliser notamment des tracés précis perpendiculaires ou à des angles déterminés du bord d'un matériau. Dans ce cas, le corps 2 comprend en plus du boîtier 3, un traînard-support 31, mobile par rapport au boîtier 3 et auquel est fixé le porte-outil 5, et pouvant coulisser librement et précisément le long du ruban 1. Le système de verrouillage commandé par le levier 32 permet de bloquer le traînard-support 31 à n'importe quelle position sur le ruban 1. Le traînard-support 31 et le boîtier 3 peuvent être solidarisés à l'aide de moyens d'ajustement 34 et 35, permettant ainsi à l'instrument combiné d'être utilisé exactement de la même manière que précédemment illustré par les figures 10 et 11. Lorsqu'on verrouille le traînard porte-guide 21 à l'extrémité du ruban et que l'on positionne la surface active 11 du guide 10 réglé à un angle déterminé contre le bord d'une surface, en maintenant le ruban 1 déroulé et tendu sur la surface à l'aide d'une seule main, l'autre main peut manipuler le traînard-support 31 et ainsi réaliser un trait de grande longueur parfaitement rectiligne. En effet lors du mouvement du traînard-support 31 sur le ruban 1, et du fait de son ajustage précis au ruban 1, ce dernier ne se déforme pas et reste parfaitement rectiligne.

La variante de l'instrument combiné illustrée par la figure 14 est utilisée notamment dans le cas de traits de plus grandes longueurs et/ou réalisés notamment sur des plaques verticales et disposant de deux bords opposés l'un de l'autre. Pour réaliser un tracé, la surface active 11 du guide 10 est positionnée contre le bord 16 du matériau 18. Le ruban 1 est déroulé de telle sorte que l'on puisse disposer l'appui mobile 37 contre le bord 43, opposé au bord 16, du matériau 18. Après verrouillage du ruban 1 au boîtier 3 à l'aide du levier 39, la vis 36 est serrée, occasionnant le déplacement de l'appui mobile 37 contre le bord 43. Le ruban 1 se tend et l'ensemble de l'instrument combiné est alors solidarisé à la surface 17 du matériau 18. En faisant coulisser le traînard-support 31 équipé d'un crayon 7, la mine 8 du crayon 7 réalise un tracé rectiligne 38 sur la surface 37.

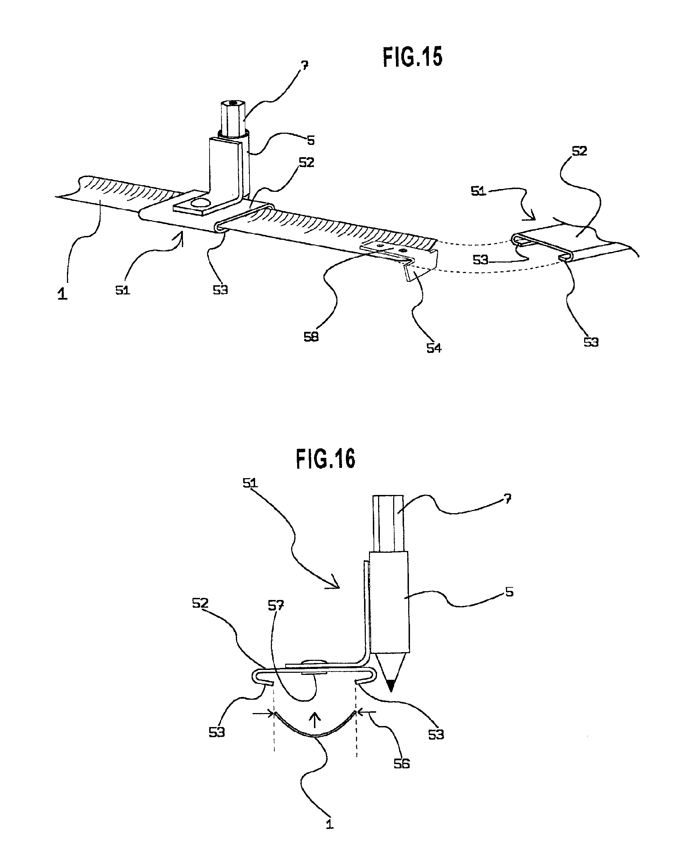

Dans l'exemple représenté à la figure 15, un accessoire 51 approprié pour constituer le traînard 31 des figures 12 à 14 comprend une réglette 52 montée coulissante sur le ruban. En regard de la face supérieure, graduée, du ruban, la réglette est fixée au porte-outil 5, dans lequel est monté le crayon 7. En regard de la face inférieure du ruban, la réglette forme deux rebords opposés 53 ménageant entre eux une ouverture permettant un montage rapide de l'accessoire sur le ruban suivant l'une et/ou l'autre des deux procédures suivantes :
- comme le montre la partie droite de la figure 15, glisser l'accessoire 51 par l'extrémité libre du ruban 1, les rebords 53 passant de part et d'autre de la languette de butée 54 normalement fixée à l'extrémité libre du ruban 1 ;
- comme le montre la figure 16, presser localement l'un vers l'autre (flèches 56) les bords latéraux du ruban, de façon à courber élastiquement la section transversale du ruban, puis engager le ruban ainsi déformé entre les rebords 53, et finalement laisser le ruban se détendre élastiquement derrière les rebords 53.

L'accessoire 51 permet comme le traînard-support 31 de tracer un trait rectiligne lorsqu'on le fait coulisser le long du ruban.

Il y a sous le réglette 52, face aux graduations du ruban, un bossage 57 qui bute contre la patte de fixation 58 de la languette 54 lorsque la réglette arrive en fin de course à l'extrémité du ruban.

Le bossage 57 est de faible hauteur, ce qui lui permet de passer sur la patte 58 si l'on exerce un effort suffisant et/ou si on déforme un peu le ruban de la manière indiquée par les flèches 56. Le bossage 57 a de préférence un biseau (non-représenté) du côté qui rencontre la patte 58 lorsqu'on monte l'accessoire 51 sur le ruban suivant l'illustration de la partie droite de la figure 15.

Outre les avantages que l'on a décrits, l'instrument combiné permet dans la pratique de supprimer totalement l'opération de tracé. Par exemple, si le porte-outil est muni d'une lame coupante destinée à prédécouper des plaques de plâtre revêtues de carton, l'utilisateur après avoir pris sa mesure, réalisera directement le pré-découpage de la plaque. Les deux opérations, mesure et pré-découpage, sont réalisées avec l'instrument combiné, et l'opération de tracé n'est plus nécessaire.

De même, lors de travaux répétitifs comme le tracé puis la coupe de matériaux à une mesure identique. L'instrument combiné est réglé et bloqué à une mesure déterminée. Après avoir réalisé un premier tracé, l'utilisateur peut poser et laisser en attente l'instrument combiné sans le dérégler pour réaliser la coupe du matériau. L'instrument peut être réutilisé avec le même réglage pour réaliser un autre tracé identique sur le même matériau ou sur d'autres matériaux. L'instrument combiné aura en quelque sorte mémorisé son propre réglage.

## Revendications

1. Instrument combiné tel que du genre mètre à ruban, et comprenant:
- un ruban gradué (1) portant un guide (10) comportant au moins une surface active (11) applicable contre un bord (16) d'un matériau d'oeuvre (18),
- un corps (2) comprenant un boîtier (3) dans lequel s'enroule le ruban (1) et comportant une face inférieure formant semelle d'appui (9),
- un système de verrouillage (4) du ruban
- sur le corps (2), un porte-outil (5) agencé de manière telle qu'on peut y régler et fixer un outil de telle sorte qu'une extrémité active de l'outil dépasse de la semelle (9) du corps (2),
**caractérisé en ce que** le guide (10) est monté de manière mobile relativement au ruban gradué (1).

2. Instrument combiné selon la revendication 1, **caractérisé en ce que** l'outil est un traceur, en particulier un crayon (7).

3. Instrument combiné selon la revendication 1 ou 2, **caractérisé en ce que** le guide (10) est monté sur le ruban (1) à l'aide d'un pivot permettant une rotation du guide (10) dans un plan sensiblement parallèle au ruban (1).

4. Instrument combiné selon la revendication 3, **caractérisé en ce qu'**il comprend un système de blocage permettant de maintenir le guide (10) à un angle déterminé par rapport à l'axe longitudinal du ruban (1).

5. Instrument combiné selon la revendication 3 ou 4, **caractérisé en ce que** le guide (10) comprend un perçage (12) permettant le passage d'une pointe destinée à être enfoncée légèrement dans un matériau d'oeuvre.

6. Instrument combiné selon l'une des revendications 1 à 5, **caractérisé en ce que** le guide (10) possède un bossage (33) permettant les opérations de traçage par copiage de profil.

7. Instrument combiné selon l'une des revendications 1 à 6, **caractérisé par** des moyens antidérapants prévus sur l'au moins une surface active du guide pour son contact avec le matériau d'oeuvre.

8. Instrument combiné selon l'une des revendications 1 à 7, **caractérisé en ce que** le guide comprend au moins deux roulettes (40) d'un diamètre approprié pour que le guide puisse parcourir fidèlement une forme courbe.

9. Instrument combiné selon l'une des revendications 1 à 8, **caractérisé en ce que** la distance entre la surface active (11) du guide (10) placé en extrémité de ruban et la pointe (8) de l'outil (7) soit égale à la mesure lue sur un viseur (20) du corps.

10. Instrument combiné selon l'une des revendications 1 à 9, **caractérisé en ce que** le guide (10) est fixé à un traînard (21) pouvant coulisser librement et précisément le long du ruban (1).

11. Instrument combiné selon la revendication 10, **caractérisé en ce que** le traînard (21) est équipé d'un système de verrouillage (22) permettant de le solidariser sélectivement au ruban (1).

12. Instrument combiné selon la revendication 10 ou 11, **caractérisé par** des moyens (23,24) d'ajustement du traînard (21) et du corps (2) lorsque ces derniers sont positionnés l'un contre l'autre.

13. Instrument combiné selon l'une des revendications 1 à 12, **caractérisé en ce que** le porte-outil (5) est fixé au boîtier (13).

14. Instrument combiné selon la revendication 13, **caractérisé en ce que** le porte-outil (6) est réglable par rapport à une surface adjacente du corps (2), en translation parallèle à l'axe longitudinal du ruban (1).

15. Instrument combiné selon l'une des revendications 1 à 12, **caractérisé en ce que** le corps (2) comprend en plus du boîtier (3), un traînard support (31), mobile par rapport au boîtier (3) et auquel est fixé le porte-outil (5), et pouvant coulisser librement et précisément le long du ruban (1).

16. Instrument combiné selon la revendication 15, **caractérisé par** un second système de verrouillage (32) permettant de solidariser sélectivement le traînard support (31) au ruban (1).

17. Instrument combiné selon l'une des revendications 1 à 16, **caractérisé en ce que** le boîtier (3) est équipé au moins indirectement d'un appui mobile, de façon que le ruban (1) étant accroché à un bord (16) d'un matériau d'oeuvre (18), le ruban est déroulé de telle sorte que l'appui mobile (37) soit positionné contre un bord opposé (43) de ce matériau pour tendre le ruban (1) lorsqu'il est verrouillé au boîtier (3).

18. Instrument combiné selon la revendication 17, **caractérisé par** une vis de réglage (36) de l'appui mobile (37) par rapport au boîtier (3).

19. Instrument combiné selon la revendication 17, **caractérisé en ce qu'**il comporte plusieurs traînards supports pouvant coulisser librement et précisément le long du ruban, ces traînards pouvant s'ajuster les uns par rapport aux autres.

20. Instrument combiné selon l'une des revendications 1 à 19, **caractérisé en ce que** le corps (2) comprend au moins une cavité permettant de stocker un et/ou des outils.

21. Procédé pour tracer un trait tel qu'un trait dessiné ou un trait de coupe sur un matériau d'oeuvre (18) à l'aide d'un instrument combiné selon l'une des revendications 1 à 16, dans lequel on positionne contre un bord du matériau d'oeuvre (18) la surface active (11) du guide (10), on positionne sur le matériau d'oeuvre la semelle (9) du corps (2) comprenant le porte-outil équipé d'un outil (7) dont l'extrémité active (8) dépasse de la semelle, et on réalise le traçage par déroulage ou enroulage du ruban (1) du ou dans le boîtier (3), en faisant ainsi glisser ce traceur sur la surface (17) du matériau (18), **caractérisé en ce que** par réglage angulaire du guide on définit un angle choisi entre la face active du guide et l'axe longitudinal du ruban.

22. Accessoire approprié pour former le traînard-support d'un instrument combiné selon la revendication 15 ou 16, comprenant :
des moyens (52) de coulissement le long du ruban gradué (1) d'un mètre à ruban,
un porte-outil (5) agencé de manière telle qu'on peut y régler et fixer un outil (7) de telle sorte qu'une extrémité active de l'outil puisse coopérer avec un matériau d'oeuvre contre lequel est placé le ruban.

23. Accessoire selon la revendication 22, **caractérisé en ce que** les moyens de coulissement comprennent, en regard de l'une des faces du ruban, deux rebords (53) entre lesquels est ménagée une ouverture permettant de monter l'accessoire (51) sur le ruban :
en pressant localement l'un vers l'autre (56) les bords latéraux du ruban (1), puis en laissant le ruban se détendre élastiquement derrière les rebords (53) ; et/ou
en glissant l'accessoire par l'extrémité libre du ruban (1), de part et d'autre d'une languette de butée (54) fixée à ladite extrémité du ruban.
